# EUROPEAN PATENT APPLICATION

(11) **EP 1 424 221 A1**
(43) Date of publication of application: **02.06.2004**
(21) Application number: 02762973.2
(22) Date of filing: 03.09.2002
(51) Int. Cl.: B60C 19/12, C09K 3/12

(54) **PNEUMATIC TIRE AND METHOD OF PRODUCING THE SAME**

(30) Priority: 04.09.2001 JP 2001266938; 22.08.2002 JP 2002242360
(71) Applicant: The Yokohama Rubber Co., Ltd., Tokyo 105-8685 (JP); Honda Giken Kogyo Kabushiki Kaisha, Minato-ku, Tokyo 107-8556 (JP)
(72) Inventor: UEDA, Yoshio, The Yokohama Rubber Co., Ltd., Hiratsuka-shi, Kanagawa 254-8601 (JP); MAKINO, Satoshi, Wako-shi, Saitama 351-0193 (JP); MIYATANI, Yasuhiro, Wako-shi, Saitama 351-0193 (JP)
(74) Representative: HOFFMANN - EITLE
(86) International application number: PCT/JP2002/008905
(87) International publication number: WO 2003/020539

(57) **Abstract**

A pneumatic tire that does not require mending a puncture outside the car and that prevents leakage of air without entailing a weight increase or the aggravation of riding comfort as found in a conventional puncture-less tire; and a method of producing the same. This pneumatic tire has a rubber-like thin film applied to the inner surface thereof, which film has a breaking extension of not less than 900% and a tensile strength of not less than 15 MPa. The rubber-like thin film is in the form of a dried thin film of latex.

## Description

### TECHNICAL FIELD

The present invention relates to a pneumatic tire suitable for a so-called puncture-less tire. More specifically, the present invention relates to a pneumatic tire having an excellent puncture-preventive function while eliminating disadvantages of a conventional puncture-less tire, and a method of producing the same.

### BACKGROUND ART

Various techniques have been conventionally proposed as measures against punctures. For example, a run-flat tire is provided with thick cushion rubber from a tread to sidewalls, enabling several hundred kilometers of driving while the tire is punctured. However, once the run-flat tire experiences a puncture, the run-flat tire cannot be mended to be used again. In addition, there is a disadvantage that riding comfort is lost during a normal drive.

Moreover, there is a puncture mending liquid, which is a liquid-like mending agent injected into a tire after punctured and solidified to seal the puncture. Although this puncture mending liquid is for general purpose use and can be simply used, it is necessary to go outside of the car to mend a tire when punctured. Thus, the liquid is unsuitable for the use on highways and the like.

Furthermore, there is a sealant tire, in which a sealant (adhesive composition) is applied to the inner surface of the tire in advance to automatically seal a puncture made when the tire is punctured. Nevertheless, in the sealant tire, it is necessary to apply the sealant thickly to obtain sufficient effects. Accordingly, there is a disadvantage that a weight increase is incurred. In addition, when applying a sealant, it is necessary to remove a release agent attached to the inner surface of the tire. Thus, the productivity of the sealant tire is poor.

### DISCLOSURE OF THE INVENTION

An object of the present invention is to provide a pneumatic tire that does not require mending a puncture outside the car and that prevents leakage of air without entailing a weight increase or the aggravation of riding comfort as found in a conventional puncture-less tire, and a method of producing the same.

The pneumatic tire of the present invention achieving the foregoing object is characterized by having a rubber-like thin film applied to the inner surface of the tire, the film having a breaking extension of not less than 900% and a tensile strength of not less than 15 MPa.

By thus applying the rubber-like thin film with large breaking extension and tensile strength to the inner surface of the tire, it is possible to prevent leakage of air with the rubber-like thin film existing around the puncture when foreign matter such as a nail pierces into a tire or the foreign matter comes off. Moreover, according to the pneumatic tire having the foregoing rubber-like thin film, the pneumatic tire does not entail a weight increase or the aggravation of riding comfort as found in a conventional puncture-less tire or require mending a puncture outside the car.

In the present invention, the thickness of the rubber-like thin film is preferably not more than 2.0 mm to avoid a weight increase. A dried thin film of latex preferably constitutes the rubber-like thin film. The dried thin film of latex has aforementioned properties and can be formed on the inner surface of the tire even in a state where a release agent is attached to the inner surface of the tire. Further, in the case where the release agent is interposed between the rubber-like thin film and the inner surface of the tire, the rubber-like thin film easily comes off from the inner surface of the tire when foreign matter such as a nail pierces into the tire. Thus, it is possible to prevent leakage of air more effectively.

The method of producing the pneumatic tire of the present invention, which makes use of the characteristics of the latex, is a method of producing a pneumatic tire having a rubber-like thin film with a breaking extension of not less than 900% and a tensile strength of not less than 15 MPa on the inner surface of the tire. The method is characterized in that the rubber-like thin film made of a dried thin film of latex is formed on the inner surface of the tire by pouring latex into the inside of a vulcanized tire and drying the latex as the tire is rotated. According to this producing method, it is possible to easily form a rubber-like thin film having uniform thickness.

### BRIEF DESCRIPTION OF THE DRAWINGS

Fig. 1 is a meridian half sectional view showing a pneumatic tire formed in an embodiment of the present invention.
Fig. 2 is a sectional view showing a state where a nail pierces a tread.
Fig. 3 is a sectional view showing a state where the nail comes off from the tread.

### BEST MODES FOR CARRYING OUT THE INVENTION

The constitution of the present invention is detailed below with reference to the attached drawings.

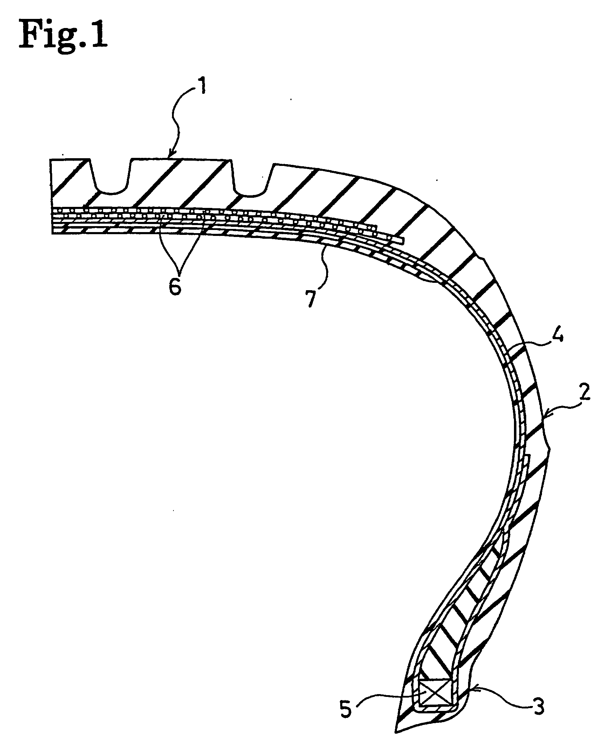

Fig. 1 shows a pneumatic tire formed in an embodiment of the present invention. Reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. A plurality of belt layers 6 are embedded on the periphery of the carcass layer 4 in the tread 1.

In the foregoing pneumatic tire, a rubber-like thin film 7 with a breaking extension of not less than 900% and a tensile strength of not less than 15MPa, having a thickness of not more than 2.0 mm, is applied to a region on the inner surface of the tire corresponding to the tread 1. The rubber-like thin film 7 may be applied not only in the region on the inner surface of the tire corresponding to the tread 1, but also in the regions corresponding to the sidewall 2 and the bead 3.

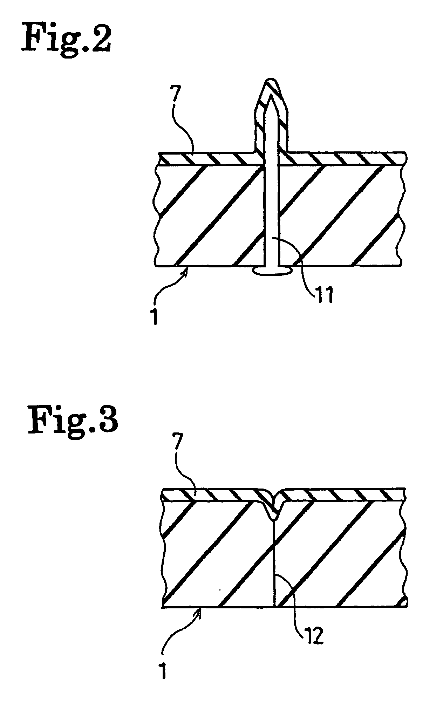

As shown in Fig. 2, the rubber-like thin film 7 prevents leakage of air by coming off from the inner surface of the tire to stick to foreign matter such as a nail 11 when the foreign matter including the nail 11 pierces the tread 1 to enter the tire. When the breaking extension and the tensile strength of the rubber-like thin film 7 are deficient, the nail 11 or the like easily breaks through the film 7 when piercing into the tire. Accordingly, the puncture-preventive function becomes insufficient.

By contrast, as shown in Fig. 3, the rubber-like thin film 7 seals a puncture 12 to prevent leakage of air when the foreign matter including the nail 11 comes off. Especially, when the foreign matter including the nail 11 comes off, the rubber-like thin film 7 stuck to the foreign matter becomes a cluster to effectively seal the puncture 12.

When the thickness of the rubber-like thin film 7 exceeds 2.0 mm, a weight increase becomes prominent. In addition, the characteristics of the tire change, and thus this thickness is not preferable. The lowest value of the thickness of the rubber-like thin film 7 is set to 0.1 mm. Therefore, the thickness of the rubber-like thin film 7 is preferably selected from within a range from 0.1 to 2.0 mm.

The rubber-like thin film 7 is formed to have uniform thickness by pouring latex, fluidity of which is adjusted arbitrarily, into the inside of a normal product tire and drying the latex as the tire is rotated gradually. Natural rubber latex is preferable for the latex. However, the latex may be synthetic rubber such as styrene-butadiene rubber (SBR), which is emulsified in water. Various compounding agents and a filler such as carbon black may be added to the latex rubber as necessary.

When a dried thin film of latex constitutes the rubber-like thin film 7, it is unnecessary to remove the release agent, which is used for vulcanization, from the inner surface of the tire. Rather, in the case where the release agent is interposed between the rubber-like thin film 7 and the inner surface of the tire, the rubber-like thin film 7 comes off from the inner surface of the tire easily when foreign matter such as a nail pierces into the tire. Thus, it is possible to prevent leakage of air more effectively. Silicone series are preferably used for the release agent. Table 1 shows a compounding example of a silicone series release agent. In Table 1, silicone emulsion has 40 weight % of silicone. The sum of mica and talc is set to 45 to 55 weight %. Addition of an antiseptic and an antifoaming agent is arbitrary.

**Table 1**

| (Weight %) | Typical Example | Range |
|---|---|---|
| Silicone Emulsion | 18 | 15-20 |
| Mica (Muscovite or Sericite) | 35 | 30-40 |
| Talc | 15 | 10-20 |
| Thickener (Carboxymethylcellulose) | 0.2 | 0.1-0.4 |
| Antiseptic | 0.2 | 0.1-0.4 |
| Antifoaming Agent (Silicone Series) | 0.01 | 0.01-0.02 |
| Water | Rest | Rest |

### Example

Prepared were pneumatic tires of a conventional example, an example and a comparative example, having a common tire size of 205/65R15. In the pneumatic tire of the conventional example, a sealant was applied as a puncture-preventive layer to a region on the inner surface of the tire corresponding to a tread. In the pneumatic tires of the example and the comparative example, a rubber-like thin film was applied as a puncture-preventive layer to a region on the inner surface of the tire corresponding to a tread.

In the conventional example, the thickness of the sealant having polybutene in polyisobutylene was set to 4 mm. In the example, the rubber-like thin film made of a dried thin film of natural rubber latex was formed, having a breaking extension of 1050%, a tensile strength of 17.5 MPa and a thickness of 1.0 mm. In the comparative example, the rubber-like thin film made of a dried thin film of natural rubber latex was formed, having a breaking extension of 500%, a tensile strength of 5 MPa and a thickness of 1.0 mm. In the example and the comparative example, the physical properties were adjusted based on a compounding amount of the thickener (acrylic emulsion) in the natural rubber latex. Although the applicability to the inner surface of the tire is improved by compounding the thickener, the breaking extension and the tensile strength reduce as the compounding amount increases.

As for these test tires, weights of the sealant or the rubber-like thin films that were applied to the inner surface of the tire were measured. At the same time, the internal pressure changes were examined under a punctured state, and the results thereof are listed in Table 2. The results of measuring the weights are indicated by an index, where the conventional example is set to 100. Smaller index values imply lighter weight. As for the internal pressure changes in the punctured state, initial internal pressure was set to 200 kPa, and the tread of the tire was pierced by an N65 nail defined by JIS. The nail was removed, and the tire was left for 24 hours. Thereafter, the internal pressure of the tire was re-measured. A difference between the initial internal pressure and the re-measured internal pressure of the tire was obtained. The smaller the difference is, the more excellent the puncture-preventive function is.

**Table 2**

| | Conventional Example | Example | Comparative Example |
|---|---|---|---|
| Puncture-Preventive Layer | Sealant | Rubber-like Thin Film | Rubber-like Thin Film |
| Thickness(mm) | 4 | 1 | 1 |
| Breaking Extension (%) | - | 1050 | 500 |
| Tensile Strength (MPa) | - | 17.5 | 5 |
| Weight (Index) | 100 | 82 | 82 |
| Internal pressure Change (kPa) | 0 | 0 | 120 |

As apparent from Table 2, the pneumatic tire of the example had excellent puncture-preventive function similar to the conventional example, and the weight increase thereof was small. On the other hand, since the pneumatic tire of the comparative example did not fulfill the physical properties defined by the present invention, sufficient puncture-preventive function could not be obtained.

Hereinbefore, the preferred embodiment of the present invention has been detailed. However, it should be understood that various changes, substitutions and replacements can be made therein without departing from spirit and scope of the invention as defined by the appended claims.

### INDUSTRIAL APPLICABILITY

According to the present invention, a rubber-like thin film with a breaking extension of not less than 900% and a tensile strength of not less than 15 MPa is applied to the inner surface of the tire. Thus, when foreign matter such as a nail pierces into the tire or the foreign matter comes off, it is possible to prevent leakage of air by the rubber-like thin film existing around the puncture. Moreover, the pneumatic tire does not require mending a puncture outside the car, or entail a weight increase or aggravation of riding comfort as found in a conventional puncture-less tire.

## Claims

1. A pneumatic tire, wherein a rubber-like film with a breaking extension of not less than 900% and a tensile strength of not less than 15 MPa is applied to an inner surface of the tire.

2. The pneumatic tire according to claim 1, wherein a thickness of the rubber-like thin film is not more than 2.0 mm.

3. The pneumatic tire according to claim 1, wherein the rubber-like thin film is a dried thin film of latex.

4. The pneumatic tire according to any one of claims 1 to 3, wherein a release agent is interposed between the rubber-like thin film and the inner surface of the tire.

5. A method of producing a pneumatic tire having a rubber-like thin film with a breaking extension of not less than 900% and a tensile strength of not less than 15 MPa applied to an inner surface of the tire, wherein the rubber-like thin film made of a dried thin film of latex is formed on the inner surface of the tire by pouring latex into an inside of a vulcanized tire and drying the latex as the tire is rotated.

6. The method of producing a pneumatic tire according to claim 5, wherein a thickness of the rubber-like thin film is not more than 2.0 mm.

7. The method of producing a pneumatic tire according to any one of claims 5 and 6, wherein a release agent is interposed between the rubber-like thin film and the inner surface of the tire.
